# EUROPEAN PATENT APPLICATION

(11) **EP 3 889 231 A1**
(43) Date of publication of application: **06.10.2021**
(21) Application number: 19888632.7
(22) Date of filing: 27.11.2019
(51) Int. Cl.: C09D 133/14, B32B 17/10, B32B 27/30, C08F 220/22, C08F 220/28, C09D 133/16, C09K 3/00, C09K 3/18

(54) **ANTIFOGGING COATING MATERIAL COMPOSITION**

(30) Priority: 30.11.2018 JP 2018226109
(71) Applicant: DAIKIN INDUSTRIES, LTD., Osaka-shi, Osaka 530-8323 (JP)
(72) Inventor: MOHARA, Kensuke, Osaka-shi, Osaka 530-8323 (JP); TORTISSIER, Gregory, Osaka-shi, Osaka 530-8323 (JP)
(74) Representative: Hoffmann Eitle
(86) International application number: PCT/JP2019/046380
(87) International publication number: WO 2020/111128

(57) **Abstract**

The present invention provides an antifogging coating material composition comprising: a polymer obtained by polymerizing a raw material monomer comprising: (a) an alkylene oxide-containing monomer represented by the formula (I) : CH₂=CX¹-CO-Y¹-(R¹O)ₙ-R² wherein the symbols are as defined in the description and (b) a fluoroalkyl group-containing monomer represented by the formula (II): CH₂=CX²-CO-Y²-Z²-Rf wherein the symbols are as defined in the description.

## Description

### Technical Field

The present disclosure relates to an antifogging coating material composition.

### Background Art

In various fields such as architecture, optics, automobile, etc., a technique for treating a surface of a base material in order to prevent fogging of the surface of the base material is known.

For example, Patent Literature 1 discloses an antifogging composition containing a block or graft copolymer having a hydrophilic polymer part and a hydrophobic polymer part, wherein the antifogging composition contains a block or graft copolymer having a specific hydrophilic polymer part and a specific hydrophobic polymer part.

### Citation List

### Patent Literature

Patent Literature 1: Japanese Patent Laid-Open No. 2017-008217
Patent Literature 2: Japanese Patent Laid-Open No. 2017-114106
Patent Literature 3: Japanese Patent Laid-Open No. 2002-105433

### Summary of Invention

### Technical Problem

The antifogging composition preferably provides the base material with antifogging properties as well as antifouling properties; however, it is generally difficult to achieve both antifogging properties and antifouling properties at a high level. The antifogging compositions disclosed in Patent Literatures 1 to 3 provide antifogging properties, but are not sufficient from the viewpoint of achieving both antifogging properties and antifouling properties.

Accordingly, it is an object of the present disclosure to provide an antifogging coating material composition capable of providing a base material with excellent antifogging properties and antifouling properties.

### Solution to Problem

The present disclosure includes the following embodiments.
[1] An antifogging coating material composition comprising:
   a polymer obtained by polymerizing a raw material monomer comprising:
      (a) an alkylene oxide-containing monomer represented by the formula (I):

         CH₂=CX¹-CO-Y¹-(R¹O)ₙ-R² (I)

         wherein
         X¹ is a hydrogen atom or a monovalent organic group,
         Y¹ is -O- or -NR³-,
         R¹ is a C₁₋₄ alkylene group,
         R² is a hydrogen atom or a C₁₋₈ alkyl group,
         R³ is a hydrogen atom or a C₁₋₄ alkyl group, and
         n is an integer of 1 to 20; and
      (b) a fluoroalkyl group-containing monomer represented by the formula (II):

         CH₂=CX²-CO-Y²-Z²-Rf (II)

         wherein
         X² is a hydrogen atom, a halogen atom, or a monovalent organic group,
         Y² is -O- or -NR¹³-,
         Z² is a single bond or a divalent organic group,
         R¹³ is a hydrogen atom or a C₁₋₄ alkyl group, and
         Rf is a C₁₋₂₀ fluoroalkyl group.
[2] The antifogging coating material composition according to [1], wherein the raw material monomer further comprises (c) a vinyl monomer represented by the formula (III):

   CH₂=CX³-R¹¹ (III)

   wherein
   X³ is a hydrogen atom, a halogen atom, or a monovalent organic group, and
   R¹¹ is a hydrogen atom or a monovalent organic group.
[3] The antifogging coating material composition according to [2], wherein (c) the vinyl monomer is a monomer represented by

   CH₂=CX³-CO-Y³-R¹²

   wherein
   X³ is a hydrogen atom, a halogen atom, or a monovalent organic group,
   Y³ is -O- or -NR²³-,
   R²³ is a hydrogen atom or a C₁₋₄ alkyl group, and
   R¹² is a hydrogen atom or a monovalent organic group, or a monomer represented by

      CH₂=CX³-R²¹

      wherein
      X³ is a hydrogen atom, a halogen atom, or a monovalent organic group, and
      R²¹ is a substituted or unsubstituted nitrogen-containing cyclic group.
[4] The antifogging coating material composition according to any one of [1] to [3], wherein a mass ratio of the alkylene oxide-containing monomer (a) to the fluoroalkyl group-containing monomer (b) is 1:10 to 10:1.
[5] The antifogging coating material composition according to any one of [2] to [4], wherein a total amount of the alkylene oxide-containing monomer (a) and the fluoroalkyl group-containing monomer (b) is 60 to 100% by mass based on a total amount of the alkylene oxide-containing monomer (a), the fluoroalkyl group-containing monomer (b), and the vinyl monomer (c).
[6] The antifogging coating material composition according to [1] or [4], wherein the raw material monomer consists of the alkylene oxide-containing monomer (a) and the fluoroalkyl group-containing monomer (b), and a mass ratio of the alkylene oxide-containing monomer (a) to the fluoroalkyl group-containing monomer (b) is 3:7 to 7:3.
[7] The antifogging coating material composition according to any one of [2] to [5], wherein the raw material monomer consists of the alkylene oxide-containing monomer (a), the fluoroalkyl group-containing monomer (b), and the vinyl monomer (c), and a mass ratio of the alkylene oxide-containing monomer (a) to the fluoroalkyl group-containing monomer (b) is 2:8 to 7:3.
[8] The antifogging coating material composition according to any one of [1] to [7], further comprising a solvent.
[9] The antifogging coating material composition according to any one of [1] to [8], further comprising an additional additive.
[10] An article comprising:
   a base material; and
   a layer formed from the antifogging coating material composition according to any one of [1] to [9] on a surface of the base material.
[11] The article according to [10], wherein the base material is glass.
[12] A polymer obtained by polymerizing a raw material monomer comprising:
   (a) an alkylene oxide-containing monomer represented by the formula (I):

      CH₂=CX¹-CO-Y¹-(R¹O)ₙ-R² (I)

      wherein
      X¹ is a hydrogen atom or a monovalent organic group,
      Y¹ is -O- or -NR³-,
      R¹ is a C₁₋₄ alkylene group,
      R² is a hydrogen atom or a C₁₋₈ alkyl group,
      R³ is a hydrogen atom or a C₁₋₄ alkyl group, and
      n is an integer of 1 to 20; and
   (b) a fluoroalkyl group-containing monomer represented by the formula (II):

      CH₂=CX²-CO-Y²-Z²-Rf (II)

      wherein
      X² is a hydrogen atom, a halogen atom, or a monovalent organic group,
      Y² is -O- or -NR¹³-,
      Z² is a single bond or a divalent organic group,
      R¹³ is a hydrogen atom or a C₁₋₄ alkyl group, and
      Rf is a C₁₋₂₀ fluoroalkyl group.

### Effects of the Invention

The antifogging coating material composition of the present disclosure can provide a base material with excellent antifogging properties and antifouling properties.

### Description of Embodiments

An antifogging coating material composition of the present disclosure comprises a polymer obtained by polymerizing a raw material monomer comprising
(a) an alkylene oxide-containing monomer and
(b) a fluoroalkyl group-containing monomer.

### (a) Alkylene oxide-containing monomer

The alkylene oxide-containing monomer (a) contained in the raw material monomer of the polymer contained in the antifogging coating material composition of the present disclosure is represented by the formula (I):

CH₂=CX¹-CO-Y¹-(R¹O)ₙ-R² (I)

wherein
X¹ is a hydrogen atom or a monovalent organic group,
Y¹ is -O- or -NR³-,
R¹ is a C₁₋₄ alkylene group,
R² is a hydrogen atom or a C₁₋₈ alkyl group,
R³ is a hydrogen atom or a C₁₋₄ alkyl group, and
n is an integer of 1 to 20.

The alkylene oxide-containing monomer (a) represented by the formula (I) has a (R¹O)ₙ group, which can provide the polymer with a hydrophilic moiety.

In the formula (I), X¹ is a hydrogen atom or a monovalent organic group.

The monovalent organic group may preferably be a C₁₋₃ alkyl group, a cyano group, a benzyl group, or a phenyl group.

The C₁₋₃ alkyl group in the monovalent organic group may be either linear or branched. In one embodiment, the C₁₋₃ alkyl group may be linear. In another embodiment, the C₁₋₃ alkyl group may be branched.

In a preferred embodiment, the monovalent organic group may be a C₁₋₃ alkyl group.

In a preferred embodiment, X¹ may be a hydrogen atom or a C₁₋₃ alkyl group, and more preferably a hydrogen atom or a methyl group.

In the formula (I), Y¹ is -O- or -NR³-, and preferably -O-.

R³ is a hydrogen atom or a C₁₋₄ alkyl group, and preferably a hydrogen atom or a methyl group. The C₁₋₄ alkyl group may be linear or branched.

In one embodiment, R³ may be a hydrogen atom.

In another embodiment, R³ may be a C₁₋₄ alkyl group, preferably a methyl or ethyl group, and more preferably a methyl group.

In one embodiment, Y¹ may be -O-.

In another embodiment, Y¹ may be -NR³-, preferably -NH- or -NCH₃-, and more preferably -NH-.

In the formula (I), R¹ is a C₁₋₄ alkylene group. The C₁₋₄ alkylene group may be linear or branched, but is preferably linear.

R¹ may preferably be a C₂₋₃ alkylene group, and more preferably -CH₂CH₂-.

In the formula (I), n may be an integer of 1 to 20, and preferably an integer of 2 to 15.

In the formula (I), R² is a hydrogen atom or a C₁₋₈ alkyl group. The C₁₋₈ alkyl group may be linear or branched.

In one embodiment, R² may be a hydrogen atom.

In another embodiment, R² may be a C₁₋₈ alkyl group, and preferably a C₁₋₄ alkyl group, such as a methyl group or an ethyl group.

In a preferred embodiment, the alkylene oxide-containing monomer (a) is represented by the formula (I'):

CH₂=CX^{1'}-CO-O-(R¹O)ₙ-R² (I')

wherein
X^{1'} is a hydrogen atom or a methyl group,
R¹ is a linear C₁₋₄ alkylene group,
R² is a hydrogen atom or a C₁₋₈ alkyl group, and
n is an integer of 1 to 20.

Examples of the alkylene oxide-containing monomer (a) include, but are not limited to, the following monomers:
CH₂=CH-CO-O-(CH₂CH₂O)ₙ-H,
CH₂=CH-CO-O-(CH₂CH₂O)ₙ-CH₃,
CH₂=CCH₃-CO-O-(CH₂CH₂O)ₙ-H, and
CH₂=CCH₃-CO-O-(CH₂CH₂O)ₙ-CH₃,
wherein n is an integer of 1 to 20.

The alkylene oxide-containing monomer (a) is preferably CH₂=CH-CO-O-(CH₂CH₂O)ₙ-H or CH₂=CCH₃-CO-O-(CH₂CH₂O)ₙ-H.

### (b) Fluoroalkyl group-containing monomer

The fluoroalkyl group-containing monomer (b) contained in the raw material monomer of the polymer contained in the antifogging coating material composition of the present disclosure is represented by the formula (II):

CH₂=CX²-CO-Y²-Z²-Rf (II)

wherein
X² is a hydrogen atom, a halogen atom, or a monovalent organic group,
Y² is -O- or -NR¹³-,
Z² is a single bond or a divalent organic group,
R¹³ is a hydrogen atom or a C₁₋₄ alkyl group, and
Rf is a C₁₋₂₀ fluoroalkyl group.

The fluoroalkyl group-containing monomer (b) represented by the formula (II) has a fluoroalkyl group, which can provide the polymer with a hydrophobic moiety.

In the formula (II), X² is a hydrogen atom, a halogen atom, or a monovalent organic group.

Preferable examples of the halogen atom include a fluorine atom, a chlorine atom, a bromine atom or an iodine atom. The halogen atom in X² is preferably a chlorine atom.

The monovalent organic group may preferably be a C₁₋₂₁ alkyl group, a cyano group, a benzyl group, or a phenyl group.

The above organic groups may be either substituted or unsubstituted. In one embodiment, the organic groups are substituted. In another embodiment, the organic groups are unsubstituted.

Examples of the substituent for the above organic groups include, but are not limited to, a halogen atom (preferably, a fluorine atom, a chlorine atom, a bromine atom, or an iodine atom), and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The C₁₋₂₁ alkyl group in the monovalent organic group may be either linear or branched. In one embodiment, the C₁₋₂₁ alkyl group may be linear. In another embodiment, the C₁₋₂₁ alkyl group may be branched.

In one embodiment, the C₁₋₂₁ alkyl group may be a C₁₋₂₁ fluoroalkyl group, preferably a C₁₋₁₀ fluoroalkyl group, and more preferably a C₁₋₃ fluoroalkyl group.

In one embodiment, the C₁₋₂₁ alkyl group may be a C₁₋₂₁ alkyl group having a -CFR¹⁶R¹⁷ group at its terminus or a C₁₋₂₁ fluoroalkyl group. In one embodiment, the C₁₋₂₁ alkyl group may be a -CFR¹⁶R¹⁷ group.

R¹⁶ and R¹⁷ are each independently a hydrogen atom, a fluorine atom, a chlorine atom, a bromine atom, or an iodine atom. R¹⁶ and R¹⁷ may each be independently, preferably a hydrogen atom, a fluorine atom or a chlorine atom, and more preferably a hydrogen atom.

In a preferred embodiment, the monovalent organic group may be a C₁₋₂₁ alkyl group.

In a preferred embodiment, X² may be a hydrogen atom, a halogen atom or a C₁₋₂₁ alkyl group, more preferably a hydrogen atom, a chlorine atom or a C₁₋₃ alkyl group, still more preferably a hydrogen atom or a C₁₋₃ alkyl group, and further preferably a hydrogen atom or a methyl group.

In the formula (II), Y² is -O- or -NR¹³-, and preferably -O-.

R¹³ is a hydrogen atom or a C₁₋₄ alkyl group, and preferably a hydrogen atom or a methyl group. The C₁₋₄ alkyl group may be linear or branched.

In one embodiment, R¹³ may be a hydrogen atom.

In another embodiment, R¹³ may be a C₁₋₄ alkyl group, preferably a methyl or ethyl group, and more preferably a methyl group.

In one embodiment, Y² may be -O-.

In another embodiment, Y² may be -NR¹³-, preferably -NH- or -NCH₃-, and more preferably -NH-.

In the formula (II), Z² is a single bond or a divalent organic group.

The divalent organic group may preferably be a divalent hydrocarbon group having 1 to 20 carbon atoms. The hydrocarbon group may contain one or more ring structures. The divalent hydrocarbon group is optionally substituted with one or more substituents.

Examples of the divalent hydrocarbon group include a divalent aliphatic hydrocarbon group and a divalent aromatic hydrocarbon group. The divalent aliphatic hydrocarbon group may be linear, branched, or cyclic, and may be either saturated or unsaturated.

Examples of the substituent of the hydrocarbon group include, but are not limited to, a halogen atom (preferably, a fluorine atom, a chlorine atom, a bromine atom, or an iodine atom), and one or more groups selected from a C₁₋₆ alkyl group, a C₂₋₆ alkenyl group, a C₂₋₆ alkynyl group, a C₃₋cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

In a preferred embodiment, the divalent organic group may be a C₁₋₆ alkylene group. The C₁₋₆ alkylene group may be linear or branched, but is preferably linear.

Z² may preferably be a single bond or a C₁₋₆ alkylene group (preferably a C₁₋₄ alkylene group such as -CH₂-,-CH₂CH₂-).

In one embodiment, Z² may be a single bond.

In another embodiment, Z² may be a divalent organic group, and preferably a C₁₋₆ alkylene group.

In the formula (II), Rf is a C₁₋₂₀ fluoroalkyl group. The C₁₋₂₀ fluoroalkyl group may be linear or branched, but is preferably linear.

The C₁₋₂₀ fluoroalkyl group may preferably be a C₁₋₁₀ fluoroalkyl group, more preferably a C₁₋₈ fluoroalkyl group, and particularly preferably a C₁₋₆ fluoroalkyl group.

The C₁₋₂₀ fluoroalkyl group preferably has a carbon atom having fluorine at its terminus, preferably -CF₃.

In a preferred embodiment, the C₁₋₂₀ fluoroalkyl group may be a C₁₋₂₀ perfluoroalkyl group. The C₁₋₂₀ perfluoroalkyl group may preferably be a C₁₋₁₀ perfluoroalkyl group, more preferably a C₁₋₈ perfluoroalkyl group, and particularly preferably a C₁₋₆ perfluoroalkyl group, such as C₆F₁₃.

In a preferred embodiment, the fluoroalkyl group-containing monomer (b) is represented by formula (II'):

CH₂=CX^{2'}-CO-O-Z^{2'}-Rf (II')

wherein
X^{2'} is a hydrogen atom or a methyl group,
Z^{2'} is a single bond or a C₁₋₆ alkylene group, and
Rf is a C₁₋₂₀ fluoroalkyl group.

Examples of the fluoroalkyl group-containing monomer (b) include, but are not limited to, the following monomers:
CH₂=CH-CO-O-CH₂-Rf,
CH₂=CCH₃-CO-O-CH₂-Rf,
CH₂=CH-CO-O-CH₂CH₂-Rf ,
CH₂=CCH₃-CO-O-CH₂CH₂-Rf, and
CH₂=CCl-CO-O-CH₂CH₂-Rf,
wherein Rf is a C₁₋₂₀ fluoroalkyl group.

The fluoroalkyl group-containing monomer (b) is preferably CH₂₌CH-CO-O-CH₂CH₂-Rf or CH₂=CCH₃-CO-O-CH₂CH₂-Rf.

### (c) Vinyl monomer

The raw material monomer of the polymer contained in the antifogging coating material composition of the present disclosure may further contain (c) a vinyl monomer represented by the formula (III) or formula (IV):

CH₂=CX³-R¹¹ (III)

CH₂=CX³R³¹CX³=CH₂ (IV)

wherein
X³ is a hydrogen atom, a halogen atom, or a monovalent organic group,
R¹¹ is a hydrogen atom or a monovalent organic group,
R³¹ is a divalent organic group.

The vinyl monomer (c) represented by the formula (III) is not a compound corresponding to the alkylene oxide-containing monomer (a) and the fluoroalkyl group-containing monomer (b) . That is, in the formula, R¹¹ is other than-CO-Y¹-(R¹O)ₙ-R² and -CO-Y²-Z²-Rf.

In the formula (III) and (IV), X³ is a hydrogen atom, a halogen atom, or a monovalent organic group.

Preferable examples of the halogen atom include a fluorine atom, a chlorine atom, a bromine atom or an iodine atom. The halogen atom in X³ is preferably a chlorine atom.

The monovalent organic group may preferably be a C₁₋₂₁ alkyl group, a cyano group, a benzyl group, or a phenyl group.

The above organic groups may be either substituted or unsubstituted. In one embodiment, the organic groups are substituted. In another embodiment, the organic groups are unsubstituted.

Examples of the substituent for the above organic groups include, but are not limited to, a halogen atom (preferably, a fluorine atom, a chlorine atom, a bromine atom, or an iodine atom), and one or more groups selected from a C₁₋₆ alkyl group, a C₂₋₆ alkenyl group, a C₂₋₆ alkynyl group, a C₃₋₁₀cycloalkyl group, a C₃₋₁₀ unsaturated cycloalkyl group, a 5 to 10-membered heterocyclyl group, a 5 to 10-membered unsaturated heterocyclyl group, a C₆-₁₀ aryl group, and a 5 to 10-membered heteroaryl group each optionally substituted with one or more halogen atoms.

The C₁₋₂₁ alkyl group in the monovalent organic group may be either linear or branched. In one embodiment, the C₁₋₂₁ alkyl group may be linear. In another embodiment, the C₁₋₂₁ alkyl group may be branched.

In one embodiment, the C₁₋₂₁ alkyl group may be a C₁₋₂₁ fluoroalkyl group, preferably a C₁₋₁₀ fluoroalkyl group, and more preferably a C₁₋₃ fluoroalkyl group.

In one embodiment, the C₁₋₂₁ alkyl group may be a C₁₋₂₁ alkyl group having a -CFR²⁶R²⁷ group at its terminus or a C₁₋₂₁ fluoroalkyl group. In one embodiment, the C₁₋₂₁ alkyl group may be a -CFR²⁶R²⁷ group.

R²⁶ and R²⁷ are each independently a hydrogen atom, a fluorine atom, a chlorine atom, a bromine atom, or an iodine atom. R²⁶ and R²⁷ may each be independently, preferably a hydrogen atom, a fluorine atom or a chlorine atom, and more preferably a hydrogen atom.

In a preferred embodiment, the monovalent organic group may be a C₁₋₂₁ alkyl group.

In a preferred embodiment, X³ may be a hydrogen atom, a halogen atom or a C₁₋₂₁ alkyl group, more preferably a hydrogen atom, a chlorine atom or a C₁₋₃ alkyl group, still more preferably a hydrogen atom or a C₁₋₃ alkyl group, and further preferably a hydrogen atom or a methyl group.

In the formula (III), R¹¹ is a hydrogen atom or a monovalent organic group.

The monovalent organic group for R¹¹ is preferably a group represented by

-CO-Y³-R¹²-

wherein
Y³ is -O- or -NR²³-,
R²³ is a hydrogen atom or a C₁₋₄ alkyl group, and
R¹² is a hydrogen atom or a monovalent organic group; or
or R²¹,
where R²¹ is optionally a substituted or unsubstituted nitrogen-containing cyclic group.

That is, the vinyl monomer (c) may preferably be a monomer represented by

CH₂=CX³-CO-Y³-R¹² or CH₂=CX³-R²¹.

R²³ is preferably a hydrogen atom or a methyl group. The C₁₋₄ alkyl group may be linear or branched.

In one embodiment, R²³ may be a hydrogen atom.

In another embodiment, R²³ may be a C₁₋₄ alkyl group, preferably a methyl or ethyl group, and more preferably a methyl group.

In one embodiment, Y³ may be -O-.

In another embodiment, Y³ may be -NR³-, preferably -NH- or -NCH₃-, and more preferably -NH-.

The monovalent organic group for R¹² may preferably be a C₁₋₆ alkyl group, a 5 to 8-membered cycloalkyl group, a 5 to 8-membered aryl group, -CᵣH₂ᵣOH, -CᵣH₂ᵣNR²⁴₂, -CᵣH₂ᵣSi(OR²⁵)₃, or -CᵣH₂ᵣN⁺R²⁴₃T⁻. Here, r is an integer of 1 to 6 independently for each group, R²⁴ may be a hydrogen atom or a C₁₋₆ alkyl group (preferably a C₁₋₄ alkyl group, more preferably a methyl group), R²⁵ may be a hydrogen atom or a C₁₋₄ alkyl group (preferably a methyl group or an ethyl group), and T⁻ may be an anion, such as a halogen atom ion (preferably Cl⁻) .

The nitrogen-containing cyclic group may preferably be a 5 to 10-membered, more preferably a 5 to 7-membered nitrogen-containing cyclic group. In a preferred embodiment, the nitrogen-containing cyclic group has a nitrogen atom bonded to a vinyl group.

Examples of the substituent in the nitrogen-containing cyclic group include oxygen, C₁₋₆ alkyl, and -NR²⁸₂ (wherein each R²⁸ is independently a hydrogen atom or C₁₋₄ alkyl).

Examples of the substituted or unsubstituted nitrogen-containing cyclic group include the following groups:

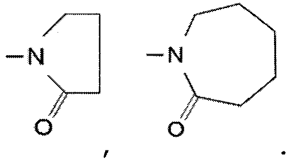

In one embodiment, R¹¹ may be
- CONH₂-,
- CON(CH₃)₂-,
- CO-OH,
- CO-O-CH₃,
- CO-O-CH₂CH₂-OH,
- CO-O-Ph (wherein Ph is a phenyl group),
- CO-NH-CH₂-OH,
- CO-O-CH₂CH₂-N(CH₃)₂,
- CO-OC(CH₃)₃, or
- CO-O(CH₂)₃-Si(OCH₃)₃.

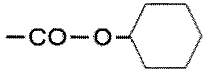

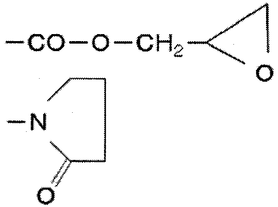

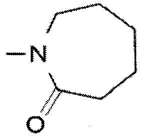

R¹¹ is preferably at least one selected from -CONH₂,-CON(CH₃)₂, -CO-OH, and -CO-NH-CH₂-OH, and more preferably at least one selected from -CO-OH and -CO-NH-CH₂-OH.

In the formula (IV), R³¹ is a divalent organic group.

The divalent organic group for R³¹ is preferably a group represented by

-R³²-R³³-R³⁴-

wherein
R³² is a single bond or -CO-O- (where R³³ is bonded on the right side),
R³⁴ is a single bond or -CO-,
R³³ is -((CH₂)ₚO)_{q}-,
p is an integer of 1 to 4, and
q is an integer of 1 to 15.

In one embodiment, R³¹ may be
-CO-O-((CH₂)ₚO)_{q}-CO-, wherein p is an integer of 1 to 4, preferably p is 2, and q is an integer of 2 to 15, preferably an integer of 2 to 10.

Examples of the vinyl monomer (c) include, but are not limited to, the following monomers:
CH₂=CH -CONH₂,
CH₂=CCH₃-CONH₂,
CH₂=CH-CON(CH₃)₂,
CH₂=CCH₃-CON(CH₃)₂,
CH₂=CH-CO-OH,
CH₂=CCH₃-CO-OH,
CH₂=CH -CO-O-CH₃,
CH₂=CCH₃-CO-O-CH₃,
CH₂=CH-CO-O-CH₂CH₂-OH,
CH₂=CCH₃-CO-O-CH₂CH₂-OH,
CH₂=CH-CO-O-Ph (wherein Ph is a phenyl group),
CH₂=CCH₃-CO-O-Ph (wherein Ph is a phenyl group),
CH₂=CH-CO-NH-CH2-OH,
CH₂=CCH₃-CO-NH-CH₂-OH,
CH₂=CCH₃-CO-O-CH₂CH₂-N(CH₃)₂,
CH₂=CH-CO-O-CH₂CH₂-N(CH₃)₂,
CH₂=CCH₃-CO-OC(CH₃)₃,
CH₂=CH-CO-OC(CH₃)₃,
CH₂=CCH₃-CO-O(CH₂)₃-Si(OCH₃)₃,
CH₂=CH-CO-O(CH₂)₃-Si(OCH₃)₃,

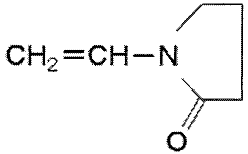

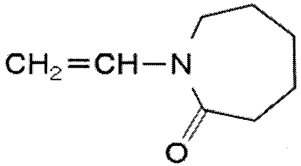

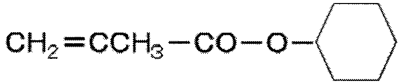

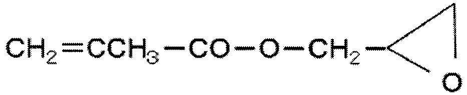

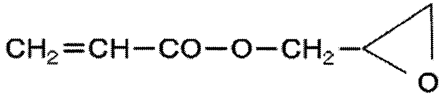

CH₂=CCH₃-CO-O-(C₂H₄O)_{q}-CO-CCH₃=CH₂ (wherein q is an integer of 2 to 15), and
CH₂=CH-CO-O-(C₂H₄O)_{q}-CO-CCH₃=CH₂ (wherein q is an integer of 2 to 15).

Each of the alkylene oxide-containing monomer (a), the fluoroalkyl group-containing monomer (b) and the vinyl monomer (c) may be used singly or in combination of two or more.

In one embodiment, the raw material monomer of the polymer contained in the antifogging coating material composition of the present disclosure contains only the alkylene oxide-containing monomer (a) and the fluoroalkyl group-containing monomer (b).

In such an embodiment, the raw material monomer is preferably an alkylene oxide-containing monomer (a) represented by

CH₂=CX^{1'}-CO-O-(R¹O)ₙ-R² (I')

and a fluoroalkyl group-containing monomer (b) represented by

CH₂=CX^{2'}-CO-O-Z^{2'}-Rf (II')

In such an embodiment, the raw material monomer is more preferably an alkylene oxide-containing monomer (a) represented by CH₂=CH-CO-O-(CH₂CH₂O)ₙ-H and a fluoroalkyl group-containing monomer (b) represented by CH₂=CH-CO-O-CH₂CH₂-Rf.

In another embodiment, the raw material monomer of the polymer of the present disclosure contains only the alkylene oxide-containing monomer (a), the fluoroalkyl group-containing monomer (b), and the vinyl monomer (c).

In such an embodiment, the raw material monomer is preferably an alkylene oxide-containing monomer (a) represented by

CH₂=CX^{1'}-CO-O-(R¹O)ₙ-R² (I')

a fluoroalkyl group-containing monomer (b) represented by

CH₂=CX^{2'}-CO-O-Z^{2'}-Rf (II' )

, and a vinyl monomer (c) represented by
CH₂=CX³-CO-Y³-R¹² or CH₂=CX³-R²¹.

In such an embodiment, the raw material monomer is more preferably an alkylene oxide-containing monomer (a) represented by
CH₂=CH-CO-O-(CH₂CH₂O)ₙ-H,
a fluoroalkyl group-containing monomer (b) represented by
CH₂=CH-CO-O-CH₂CH₂-Rf ,
, and a vinyl monomer (c) represented by
CH₂=CH-CO-OH and CH₂=CH-CO-NH-CH₂-OH.

In such an embodiment, the raw material monomer is still more preferably an alkylene oxide-containing monomer (a) represented by
CH₂=CH-CO-O-(CH₂CH₂O)ₙ-H,
a fluoroalkyl group-containing monomer (b) represented by
CH₂=CH-CO-O-CH₂CH₂-Rf,
, and a vinyl monomer (c) represented by
CH₂=CH-CO-OH,
CH₂=CH-CO-NH-CH₂-OH, and
CH₂=CH-CONH₂ or CH₂=CH-CON(CH₃)₂.

In a preferred embodiment, the total concentration of the monomers (a) and (b) in the raw material monomer of the polymer contained in the antifogging coating material composition of the present disclosure may be 1 to 95 mass%, more preferably 10 to 90 mass%, and still more preferably 30 to 80 mass%.

In one embodiment, the mass ratio of the alkylene oxide-containing monomer (a) to the fluoroalkyl group-containing monomer (b) in the raw material monomer of the polymer contained in the antifogging coating material composition of the present disclosure may be 1:10 to 10:1, preferably 2:8 to 8:2.

In one embodiment, the total amount of the alkylene oxide-containing monomer (a) and the fluoroalkyl group-containing monomer (b) in the raw material monomer of the polymer contained in the antifogging coating material composition of the present disclosure may be 60 to 100% by mass based on the total amount of the alkylene oxide-containing monomer (a), the fluoroalkyl group-containing monomer (b), and the vinyl monomer (c).

In one embodiment, the raw material monomer of the polymer contained in the antifogging coating material composition of the present disclosure consists of the alkylene oxide-containing monomer (a) and the fluoroalkyl group-containing monomer (b), and a mass ratio of the alkylene oxide-containing monomer (a) to the fluoroalkyl group-containing monomer (b) may be 3:7 to 7:3.

In one embodiment, the raw material monomer of the polymer contained in the antifogging coating material composition of the present disclosure consists of the alkylene oxide-containing monomer (a), the fluoroalkyl group-containing monomer (b), and the vinyl monomer (c), and a mass ratio of the alkylene oxide-containing monomer (a) to the fluoroalkyl group-containing monomer (b) may be 2:8 to 7:3.

The number-average molecular weight of the polymer contained in the antifogging coating material composition of the present disclosure may preferably be 500 to 10,000, and more preferably 600 to 6,000. Such number-average molecular weight can be measured using GPC.

In the antifogging coating material composition, the polymer may be one kind or two or more kinds.

The antifogging coating material composition of the present disclosure can provide a base material with excellent antifogging properties and antifouling properties by containing the polymer. Accordingly, the present disclosure also provides the above polymer.

The polymer contained in the antifogging coating material composition of the present disclosure is produced from a polymerization composition containing the raw material monomer. The composition of the obtained polymer can be confirmed by ¹H-NMR, ¹⁹F-NMR, FT-IR, LC/MS, GC/MS, and the like.

The polymerization composition may contain other components such as a solvent, a chain transfer agent or a polymerization initiator in addition to the raw material monomer.

The solvent is not limited, and can be appropriately selected according to the monomer to be used. Examples of the solvent include, but are not limited to: a hydrocarbon solvent such as hexane, heptane, and octane; a chlorinated hydrocarbon solvent such as dichloromethane, chloroform, carbon tetrachloride, and dichloroethane; an ether-based solvent such as diethyl ether, dimethoxyethane, diglyme, and triglyme; an ester-based solvent such as diethyl oxalate, ethyl pyruvate, ethyl 2-hydroxybutyrate, ethyl acetoacetate, ethyl acetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate, and ethyl 2-hydroxyisobutyrate; a propylene glycol-based solvent such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether; a ketone-based solvent such as acetone, methyl ethyl ketone, methyl isobutyl ketone, 2-hexanone, cyclohexanone, methyl amino ketone, and 2-heptanone; an alcohol-based solvent such as methanol, ethanol, propanol, isopropanol, butanol, and diacetone alcohol; an aromatic hydrocarbon such as benzene, toluene, xylene, and nitrobenzene; a perfluoroaliphatic hydrocarbon having 5 to 12 carbon atoms (for example, perfluorohexane, perfluoromethylcyclohexane, and perfluoro-1,3-dimethylcyclohexane); a polyfluoroaromatic hydrocarbon (for example, bis(trifluoromethyl)benzene); a polyfluoroaliphatic hydrocarbon; a hydrofluoro ether (HFE) (for example, alkyl perfluoroalkyl ether such as perfluoropropyl methyl ether (C₃F₇OCH₃), perfluorobutyl methyl ether (C₄F₉OCH₃), perfluorobutyl ethyl ether (C₄F₉OC₂H₅), and perfluorohexyl methyl ether (C₂F₅CF(OCH₃)C₃F₇), etc., wherein the perfluoroalkyl group or alkyl group may be linear or branched), a hydrochlorofluorocarbon (for example, ASAHIKLIN AK-225 (tradename)); and a cellosolve-based solvent such as methyl cellosolve, ethyl cellosolve, methyl cellosolve acetate, and ethyl cellosolve acetate, and a fluorine alcohol such as trifluoroethanol, pentafluoroisopropanol, H(CF₂CF₂)nCH₂OH. Such a solvent can be used singly or as a mixture of two or more kinds thereof.

In one embodiment, the solvent may be a propylene glycol-based solvent such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether, preferably propylene glycol monomethyl ether; or an alcohol-based solvent such as methanol, ethanol, propanol, isopropanol, butanol, and diacetone alcohol, preferably isopropanol.

The chain transfer agent used may be mercaptans such as n-butyl mercaptan, n-dodecyl mercaptan, t-butyl mercaptan, ethyl thioglycolate, 2-ethylhexyl thioglycolate, 2-mercaptoethanol, isooctyl mercaptoate, thioglycolic acid, 3-mercaptopropionic acid, methoxybutyl thioglycolate, and silicone mercaptan (manufactured by Shin-Etsu Chemical Co., Ltd. KF-2001); thiols such as dodecanethiol and benzenethiol; or alkyl halides such as chloroform, carbon tetrachloride, and carbon tetrabromide. Such a chain transfer agent may be used singly, or two or more kinds thereof may be used in combination.

The polymerization initiator used may be an azo initiator such as azobisisobutyronitrile, methyl azoisobutyrate, and azobisdimethylvaleronitrile; benzoyl peroxide, potassium persulfate, ammonium persulfate, benzophenone derivative, phosphine oxide derivative, benzoketone derivative, phenylthioether derivative, azide derivative, diazo derivative, and disulfide derivative. Such a polymerization initiator agent may be used singly, or two or more kinds thereof may be used in combination.

In one embodiment, the polymerization initiator may be an azo-based initiator such as azobisisobutyronitrile, methyl azoisobutyrate, and azobisdimethylvaleronitrile, preferably azobisisobutyronitrile.

The antifogging coating material composition may contain a solvent. Such a solvent may be a solvent similar to the solvent used for the compositions to produce the polymer. Such a solvent may be the same as or different from the solvent used for the composition for producing the polymer.

The antifogging coating material composition may further contain an additional additive.

Examples of the additional additive include a catalyst, a leveling agent, or a curing agent.

Examples of the catalyst include acids (such as acetic acid and trifluoroacetic acid), bases (such as ammonia, triethylamine, and diethylamine), and transition metals (such as Ti, Ni, and Sn).

Examples of the leveling agent include polyester-modified polydimethylsiloxane, polyether-modified polydimethylsiloxane, polyester-modified polymethylalkylsiloxane, polyether-modified polymethylalkylsiloxane, and aralkyl-modified polymethylalkylsiloxane. Specifically, the leveling agent used may be a silicon-based leveling agent such as BYK-300, BYK-301, BYK-302, BYK-330, BYK-310, BYK-315, BYK-320, and BYK-322, etc., manufactured by BYK-Chemie, POLYFLOW 400X, 401, 402, and etc., manufactured by Kyoeisha Chemical Co., Ltd., and DISPARLON 1711EF, 1751N, and 1761, etc., manufactured by Kusumoto Chemicals, Ltd.; or an acrylic polymer-based leveling agent such as BYK-307, BYK-333, BYK-350, BYK-361 N, BYK-378, and BYK-3440, etc., manufactured by BYK-Chemie, POLYFLOW 7, 50E, 75, and 95, etc., manufactured by Kyoeisha Chemical Co., Ltd., and DISPARLON 1970, 230, LF-1980, and 1982, etc., manufactured by Kusumoto Chemicals, Ltd. Such a leveling agent may be used singly, or two or more kinds thereof may be used in combination.

The curing agent used may be, for example, isocyanates, amino resins, acid anhydrides, polyepoxy compounds, and isocyanate group-containing silane compounds. Such a curing agent may be used singly, or two or more kinds thereof may be used in combination.

Examples of the isocyanates include 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane-1,4-diisocyanate, trimers thereof, adducts thereof, biurets thereof and isocyanurates thereof, polymers thereof having two or more isocyanate groups, and blocked isocyanates.

Examples of the amino resins include urea resins, melamine resins, benzoguanamine resins, and glycoluryl resins; methylolated melamine resin obtained by methylolating melamine; and alkyl-etherified melamine resins obtained by etherifying methylolated melamine with alcohols such as methanol, ethanol, and butanol.

Examples of the acid anhydrides include phthalic anhydride, pyromellitic anhydride, and mellitic anhydride.

Examples of the polyepoxy compound include

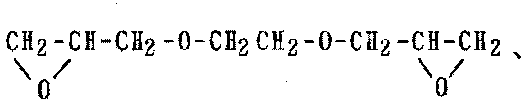

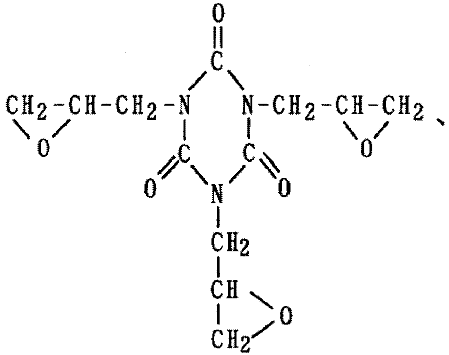

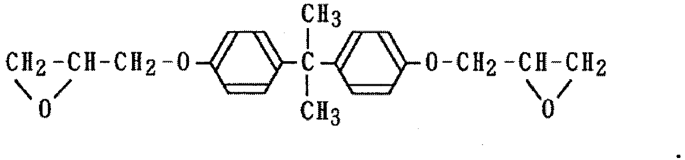

Examples of the isocyanate group-containing silane compound include OCNC₃H₆Si(OC₂H₅)₃ and OCNC₂H₄Si(OCH₃)₃.

### (Article)

Next, an article of the present disclosure will be described.

The present disclosure provides an article comprising a base material and a polymer layer formed from the antifogging coating material composition or polymer of the present disclosure (hereinafter, collectively referred to as "antifogging coating material composition or the like") on a surface of the base material. The polymer layer has both high antifogging properties and antifouling properties. Thus, the article of the present disclosure has both high antifogging properties and antifouling properties. Accordingly, the present disclosure also provides a polymer formed from the antifogging composition in addition to the article.

The article can be produced, for example, as follows.

First, a base material is provided. The base material to which the antifogging coating material composition of the present disclosure or the like may be applied may be made of a material such as glass or resin (natural or synthetic resins, such as common plastic materials, which may be in the form of plates, films, or other forms).

In a preferred embodiment, the base material is a transparent material, such as glass and a transparent resin (for example, a transparent acrylic resin or the like).

The shape of the base material is not limited. The surface region of the base material on which the antifogging coating material composition is to be applied is at least a part of the substrate surface, and may be suitably determined according to the application of an article to be produced, specific specifications, and the like.

The layer formation of the antifogging coating material composition of the present disclosure or the like can be carried out by applying the antifogging coating material composition or the like to a surface of the base material so as to cover the surface.

The method of coating is not limited, and examples include dip coating, spin coating, flow coating, spray coating, roll coating, gravure coating and an analogous method.

The layer of the antifogging coating material composition or the like obtained above may be cured by heating, for example. The heating conditions can be appropriately set according to the kind of the antifogging coating material composition or the like, and for example, the heating temperature may preferably be 50 to 180°C, and more preferably 80 to 150°C. The heating time may preferably be 10 minutes to 5 hours, and more preferably 30 minutes to 2 hours.

The thickness of the layer of the antifogging coating material composition or the like is not limited, but for example, the thickness of the layer is preferably in the range of 0.1 to 100 µm, preferably 0.5 to 30 µm, in view of antifogging properties, antifouling properties, and optical performance.

In the layer of the antifogging coating material composition (hereinafter referred to as "antifogging coating material composition layer") or the like, the initial static contact angle of water may be preferably 100° or more, more preferably 110° or more, and still more preferably 120° or more.

In the present disclosure, the static contact angle of water is a value measured using a contact angle measurement apparatus (manufactured by Kyowa Interface Science, Inc.) at 2 µL of water at 21°C and 65% humidity. The initial static contact angle of water is the static contact angle after 1,000 ms when a predetermined amount of water is dropped onto the antifogging coating material composition layer in a state where a surface thereof is not yet touched after the formation of the antifogging coating material composition layer.

In the antifogging coating material composition layer, the static contact angle of water after 60,000 ms from the time when water is dropped onto the antifogging coating material composition layer is -60° or less, and preferably-50° or less in comparison with the static contact angle of the initial water.

The articles of the present disclosure may be, but are not limited to, on-board automotive components, particularly optical components such as automotive windshields, rear glasses, side glasses, on-board automotive camera lenses, and smartphone camera lenses, bathroom mirrors, and decorative mirrors.

The antifogging coating material composition of the present disclosure, the polymer, and the article obtained by using the antifogging coating material composition or the like have been described in detail. The applications of the antifogging coating material composition and the polymer of the present disclosure, the method of use, and the method for producing the article are not limited to those exemplified above.

### Examples

The antifogging coating material composition of the present disclosure, the polymers and articles contained therein will be specifically described with reference to the following Examples, but the present disclosure is not limited to these Examples. "parts" and "%" are "parts by mass" and "% by mass", unless otherwise specified.

### Synthetic Example 1 (ω-hydroxy-polyoxyethylene acrylate/C6FA/N-MAM/AA (= weight ratio of 14.8/9.5/0.25/0.08) copolymer)

A 100 mL volume reactor equipped with a stirrer, thermometer, reflux condenser, dropping funnel, nitrogen inlet, and heating device was prepared, and 44.5 parts of the solvent 2-propanol were added. Subsequently, under stirring, a monomer comprising 9.5 parts of F(CF₂)₆CH₂CH₂OCOCH=CH₂ (hereinafter, referred to as "C6FA"), 14.8 parts of ω-hydroxy-polyoxyethylene acrylate (BLEMMER^{R} AE-200 manufactured by NOF Corporation: average degree of polymerization of polyoxyethylene group n ≈ 4.5), 0.25 parts of N-methylolacrylamide (hereinafter, referred to as "N-MAM"), and 0.08 parts of acrylic acid (hereinafter, referred to as "AA") (total 24.63 parts of monomers), and 0.03 parts of azobisisobutyronitrile (hereinafter referred to as "AIBN") as a polymerization initiator were added in this order, and the mixture was mixed and stirred under a nitrogen atmosphere of 65°C for 6 hours to perform copolymerization. The reaction mixture was then cooled to room temperature to obtain a fluorine-containing copolymer solution (S1). The solids concentration of this solution was 55% by weight.

### Synthetic Example 2 (ω-hydroxy-polyoxyethylene acrylate/C6FA/N-MAM/N,N-dimethylacrylamide/AA (= weight ratio of 3.0/10.5/0.25/3/0.08) copolymer)

Copolymerization and post-treatment were carried out in the same manner as in Synthetic Example 1 except that using 30.5 parts of 2-propanol as a solvent, a monomer comprising 10.5 parts of F(CF₂)₆CH₂CH₂OCOCH=CH₂, 3 parts of N,N-dimethylacrylamide, 3 parts of ω-hydroxy-polyoxyethylene acrylate (BLEMMER^{R} AE-200 manufactured by NOF Corporation: average degree of polymerization of polyoxyethylene group n ≈ 4.5), 0.25 parts of N-methylolacrylamide, and 0.08 parts of acrylic acid (total 24.63 parts of monomers) and 0.03 parts of azobisisobutyronitrile as an initiator were added in this order to obtain a fluorine-containing copolymer solution (S2).

### Synthetic Example 3 (ω-hydroxy-polyoxyethylene acrylate/C6FA/N-MAM/N,N-dimethylacrylamide/AA (= weight ratio of 4.0/8.0/0.19/1.85/0.05) copolymer)

Copolymerization and post-treatment were carried out in the same manner as in Synthetic Example 1 except that using 25.5 parts of 2-propanol as a solvent, a monomer comprising 8.0 parts of F(CF₂)₆CH₂CH₂OCOCH=CH₂, 1.85 parts of N,N-dimethylacrylamide, 4.0 parts of ω-hydroxy-polyoxyethylene acrylate (BLEMMER^{R} AE-200 manufactured by NOF Corporation: average degree of polymerization of polyoxyethylene group n ≈ 4.5), 0.19 parts of N-methylolacrylamide (N-MAM), and 0.05 parts of acrylic acid (AA) (total 14.09 parts of monomers) and 0.02 parts of azobisisobutyronitrile as an initiator were added in this order to obtain a fluorine-containing copolymer solution (S3).

### Synthetic Example 4 (ω-hydroxy-polyoxyethylene acrylate/C6FA (= weight ratio of 8.0/5.33) copolymer)

Copolymerization and post-treatment were carried out in the same manner as in Synthetic Example 1 except that using 24 parts of 2-propanol as a solvent, a monomer comprising 5.33 parts of F(CF₂)₆CH₂CH₂OCOCH=CH₂, 8.0 parts of ω-hydroxy-polyoxyethylene acrylate (BLEMMER^{R} AE-200 manufactured by NOF Corporation: average degree of polymerization of polyoxyethylene group n ≈ 4.5) (total 13.33 parts of monomers) and 0.02 parts of azobisisobutyronitrile as an initiator were added in this order to obtain a fluorine-containing copolymer solution (S4).

The composition of the resulting polymer was confirmed by ¹H-NMR and ¹⁹F-NMR.
¹H-NMR: (-CH2CH2O-) 3.64 ppm; ¹⁹F-NMR: (CF3-) -80.0, (-CF2-) -63.28, -112.44, -119.92, -121.55, -125.03 ppm

Materials for producing fluorine-containing copolymer solutions (S1) to (S4) are shown in the following table.

**[Table 1]**

| | S1 | | S2 | | S3 | | S4 | |
|---|---|---|---|---|---|---|---|---|
| | Component | Content (parts by mass) | Component | Content (parts by mass) | Component | Content (parts by mass) | Component | Content (parts by mass) |
| Alkylene oxide-containing monomer | BLEMMERAE-200 | 14.8 | BLEMMERAE-200 | 3.0 | BLEMMERAE-200 | 4.0 | BLEMMERAE-200 | 8.0 |
| Fluoroalkyl group-containing monomer | C6FA | 9.5 | C6FA | 10.5 | C6FA | 8.0 | C6FA | 5.33 |
| Vinyl monomer | N-MAM acrylic acid | 0.25 | N-MAM N,N-dimethylacrylamide acrylic acid | 0.25 | N-MAM | 0.19 | | |
| | | 0.08 | | 3.0 | N,N -dimethylacrylamide acrylic acid | 1.85 | | |
| | | | | 0.08 | | 0.05 | | |
| Polymerization initiator | AIBN | 0.03 | AIBN | 0.03 | AIBN | 0.02 | AIBN | 0.02 |
| Solvent | 2-propanol | 44.5 | 2-propanol | 30.5 | 2-propanol | 25.5 | 2-propanol | 24.0 |

### Preparation Example 1

Each of the fluorine-containing copolymer solutions (S1) to (S4) obtained above was coated on a transparent glass substrate by a spin coating method so that the film thickness after curing would be 0.5 to 10 µm, air-dried for 10 minutes, and then heated at 120°C for 1 hour to obtain a test piece of an antifogging coating film. The following (1) to (6) were evaluated for these antifogging coating films. The results are shown in Table 2.

### (1) "Static contact angle measurement"

The static contact angle was measured 1000 ms to 60,000 ms after dropping a droplet with a droplet volume of 2 µL onto a test piece of the antifogging coating film, using DropMaster 701 manufactured by Kyowa Interface Science Co., Ltd.

### (2)"Film thickness measurement"

The film thickness of the antifogging coating film was measured using a FILMETRICS F 20.

### (3)"Optical properties"

The haze value and total light transmittance of the antifogging coating film were measured with a Haze Meter NDG 7000SP Nippon Denshoku Industries Co., Ltd.

### (4) "Exhalation antifogging property test"

Exhalation was applied to a test piece of the antifogging coating film at room temperature, and the presence or absence of fogging was visually evaluated. Those with no fogging were rated as Y and those with fogging as N.

### (5) "Steam antifogging test"

A test piece of the antifogging coating film was placed on the water surface of a hot water bath kept at 85°C with the coating film surface facing down, and the presence or absence of fogging after 5 minutes was visually evaluated. Those with no fogging in which a smooth water film is formed were rated as Y and those with fogging as N.

### (6) Antifouling test

n-HD (n-hexadecane) was dropped to a test piece of the antifogging coating film at a droplet volume of 2 µL and held for 3 minutes, then the test piece was tilted to 30° and wiped with water, and the presence or absence of n-HD remained on the test piece was visually evaluated. Those with no residue were rated as Y and those with residue as N.

**[Table 2]**

| Fluorine-containing copolymer solution | Static contact angle (°) 1s→60s) | Film thickness (µm) | Haze value (%) | Total light transmittance | Exhalation antifogging property | Steam antifogging property | Antifouling property |
|---|---|---|---|---|---|---|---|
| S1 | 119→70 | 5-6 | 0.2-0.4 | 92.0-92.2 | Y | Y | Y |
| S2 | 125→94 | 4-5 | 0.1-0.3 | 92-92.5 | Y | Y | Y |
| S3 | 119→90 | 5-6 | 0.29 | 92.1 | Y | Y | Y |
| S4 | 95→52 | 5-6 | 0.24 | 92.0 | Y | Y | Y |

### Industrial Applicability

The antifogging composition of the present disclosure can be suitably utilized to provide a variety of base materials with antifogging properties and antifouling properties.

## Claims

1. An antifogging coating material composition comprising:
a polymer obtained by polymerizing a raw material monomer comprising:
(a) an alkylene oxide-containing monomer represented by the formula (I):
CH₂=CX¹-CO-Y¹-(R¹O)ₙ-R² (I)
wherein
X¹ is a hydrogen .atom or a monovalent organic group,
Y¹ is -O- or -NR³-,
R¹ is a C₁₋₄ alkylene group,
R² is a hydrogen atom or a C₁₋₈ alkyl group,
R³ is a hydrogen atom or a C₁₋₄ alkyl group, and
n is an integer of 1 to 20; and
(b) a fluoroalkyl group-containing monomer represented by the formula (II):
CH₂=CX²-CO-Y²-Z²-Rf (II)
wherein
X² is a hydrogen atom, a halogen atom, or a monovalent organic group,
Y² is -O- or -NR¹³-,
Z² is a single bond or a divalent organic group,
R¹³ is a hydrogen atom or a C₁₋₄ alkyl group, and
Rf is a C₁₋₂₀ fluoroalkyl group.

2. The antifogging coating material composition according to claim 1, wherein the raw material monomer further comprises (c) a vinyl monomer represented by the formula (III):
CH₂=CX³-R¹¹ (III)
wherein
X³ is a hydrogen atom, a halogen atom, or a monovalent organic group, and
R¹¹ is a hydrogen atom or a monovalent organic group.

3. The antifogging coating material composition according to claim 2, wherein (c) the vinyl monomer is a monomer represented by
CH₂=CX³-CO-Y³-R¹²
wherein
X³ is a hydrogen atom, a halogen atom, or a monovalent organic group,
Y³ is -O- or -NR²³-,
R²³ is a hydrogen atom or a C₁₋₄ alkyl group, and
R¹² is a hydrogen atom or a monovalent organic group, or a monomer represented by
CH₂=CX³-R²¹
wherein
X³ is a hydrogen atom, a halogen atom, or a monovalent organic group, and
R²¹ is a substituted or unsubstituted nitrogen-containing cyclic group.

4. The antifogging coating material composition according to any one of claims 1 to 3, wherein a mass ratio of the alkylene oxide-containing monomer (a) to the fluoroalkyl group-containing monomer (b) is 1:10 to 10:1.

5. The antifogging coating material composition according to any one of claims 2 to 4, wherein a total amount of the alkylene oxide-containing monomer (a) and the fluoroalkyl group-containing monomer (b) is 60 to 100% by mass based on a total amount of the alkylene oxide-containing monomer (a), the fluoroalkyl group-containing monomer (b), and the vinyl monomer (c).

6. The antifogging coating material composition according to claim 1 or 4, wherein the raw material monomer consists of the alkylene oxide-containing monomer (a) and the fluoroalkyl group-containing monomer (b), and a mass ratio of the alkylene oxide-containing monomer (a) to the fluoroalkyl group-containing monomer (b) is 3:7 to 7:3.

7. The antifogging coating material composition according to any one of claims 2 to 5, wherein the raw material monomer consists of the alkylene oxide-containing monomer (a), the fluoroalkyl group-containing monomer (b), and the vinyl monomer (c), and a mass ratio of the alkylene oxide-containing monomer (a) to the fluoroalkyl group-containing monomer (b) is 2:8 to 7:3.

8. The antifogging coating material composition according to any one of claims 1 to 7, further comprising a solvent.

9. The antifogging coating material composition according to any one of claims 1 to 8, further comprising an additional additive.

10. An article comprising:
a base material; and
a layer formed from the antifogging coating material composition according to any one of claims 1 to 9 on a surface of the base material.

11. The article according to claim 10, wherein the base material is glass.

12. A polymer obtained by polymerizing a raw material monomer comprising:
(a) an alkylene oxide-containing monomer represented by the formula (I):
CH₂=CX¹-CO-Y¹-(R¹O)ₙ-R² (I)
wherein
X¹ is a hydrogen atom or a monovalent organic group,
Y¹ is -O- or -NR³-,
R¹ is a C₁₋₄ alkylene group,
R² is a hydrogen atom or a C₁₋₈ alkyl group,
R³ is a hydrogen atom or a C₁₋₄ alkyl group, and
n is an integer of 1 to 20; and
(b) a fluoroalkyl group-containing monomer represented by the formula (II):
CH₂=CX²-CO-Y²-Z²-Rf (II)
wherein
X² is a hydrogen atom, a halogen atom, or a monovalent organic group,
Y² is -O- or -NR¹³-,
Z² is a single bond or a divalent organic group,
R¹³ is a hydrogen atom or a C₁₋₄ alkyl group, and
Rf is a C₁₋₂₀ fluoroalkyl group.
